# EUROPÄISCHE PATENTSCHRIFT

(11) **EP 1 134 247 B1**
(45) Veröffentlichungstag und Bekanntmachung des Hinweises auf die Patenterteilung: **12.09.2007**
(21) Anmeldenummer: 01106114.0
(22) Anmeldetag: 13.03.2001
(51) Int. Cl.: C08G 18/72, C08G 18/80

(54) **Hochfunktionelle Polyisocyanate**
Highfunctionality polyisocyanates
Polyisocyanates ayant une fonctionnalité élevée

(30) Priorität: 17.03.2000 DE 10013187
(43) Veröffentlichungstag der Anmeldung: 19.09.2001
(73) Patentinhaber: BASF Aktiengesellschaft, 67056 Ludwigshafen (DE)
(72) Erfinder: Bruchmann, Bernd, Dr., 67251 Freinsheim (DE); Renz, Hans, Dr., 67149 Meckenheim (DE); Königer, Rainer, Dr., 67251 Freinsheim (DE); Ehe, Ulrike, 672145 Lambsheim (DE); Treuling, Ulrich, Dr., 64625 Bensheim (DE); Müller-Mall, Rudolf, Dr., 67141 Neuhofen (DE)

(56) Entgegenhaltungen:
- EP-A- 0 150 444
- EP-A- 0 752 433
- EP-A- 0 780 413
- EP-A- 1 026 185

## Beschreibung

Die vorliegende Erfindung betrifft gezielt aufgebaute, hochfunktionelle Polyisocyanate auf Basis von zwei Di- oder Polyisocyanaten, sowie ein Verfahren zu ihrer Herstellung.

Hochfunktionelle Polyisocyanate können u.a. als Bausteine zur Polyurethanherstellung, z.B. zur Herstellung von Lacken, Überzügen, Klebstoffen, Dichtmassen, Gießelastomeren oder Schaumstoffen technisch vorteilhaft eingesetzt werden. Jedoch sind sie kommerziell nur eingeschränkt verfügbar.

Im Bereich der hochfunktionellen aromatischen Isocyanate sind höhermolekulare Isomere des Diphenylmethandiisocyanats (MDI) bekannt, deren Funktionalitäten deutlich über 3 liegen. Der Nachteil dieser MDI-Verbindungen ist jedoch, daß sie sich nur schwer rein isolieren lassen. Bei der Herstellung von handelsüblichem Polymer-MDI werden diese hochfunktionellen Spezies nur in geringen Mengen gebildet, so daß sie immer in Mischung mit überwiegend difunktionellem Monomer-MDI und mit trifunktionellen Oligomer-MDI-Typen vorliegen. Daraus resultiert, daß die Funktionalität der MDI-Mischung insgesamt deutlich unter 3 liegt.

Bei aliphatischen Polyisocyanaten, die hauptsächlich als Vernetzer für PU-Lacksysteme eingesetzt werden, liegen die mittleren Funktionalitäten in der Regel zwischen 2 und 4. Die Herstellung von höherfunktionelleren aliphatischen Polyisocyanaten ist technisch und wirtschaftlich aufwendig. Diese Produkte werden in der Regel durch eine Reaktion von z.B. Hexamethylendiisocyanat (HDI) oder HDI-Trimer mit einem mehrfunktionellen Polyol hergestellt. Die Produkte enthalten dann Urethan- und/oder Allophanatgruppen, sind hochviskos, weisen einen niedrigen NCO-Gehalt auf und werden, z.T. in NCO-blockierter Form, als feuchtigkeitshärtende Einkomponenten PU-Systeme für Lacke und Überzüge eingesetzt.

EP-A-336205 und DE-A-3621706 beschreiben die Herstellung von hochviskosen Isocyanuratgruppen enthaltenden Produkten durch Trimerisierung von HDI und anschließende Umsetzung mit Diolen, Polyesterdiolen oder Polyestertriolen. Nachteilig sind hier die vergleichsweise hohen Viskositäten der Produkte.

In JP-A-6312969 wird die Herstellung von hochviskosen Polyisocyanaten mit Viskositäten von 5000 - 100000 mPas und Funktionalitäten von 4.5 - 10 beschrieben. Diese Produkte werden erhalten durch Trimerisierung von HDI in Gegenwart eines mehrfunktionellen Polyether- oder Polyesterols. Die Produkte werden verwendet um NCO-blockierte Polyisocyanate herzustellen.

In den genannten Schriften erfolgt der Aufbau der hochfunktionellen aliphatischen Molekülstrukturen ungeregelt und uneinheitlich, da die Reaktionen der Trimerisierung des Isocyanats, der Urethanbildung und der Allophanatbildung entweder parallel oder hintereinander ablaufen.

Der Erfindung lag daher die Aufgabe zugrunde, gezielt aufgebaute Polyisocyanate bereitzustellen, die aufgrund ihres definierten Aufbaus vorteilhafte Eigenschaften, wie hohe Funktionalität, hohe Reaktivität, geringe Viskosität und gute Löslichkeit, in sich vereinen können, sowie ein Verfahren zur Herstellung dieser hochfunktionellen Polyisocyanate.

Ferner war es eine Aufgabe der Erfindung ein Verfahren bereitzustellen, das es erlaubt, handelsübliche, technische Di- oder Polyisocyanate durch Umsetzung zu hochfunktionellen Polyisocyanaten in der Funktionalität zu erhöhen.

Die Aufgaben konnten erfindungsgemäß gelöst werden, indem ein Additionsprodukt (A) und/oder ein Polyadditionsprodukt (P), das durch Umsetzung eines Di- oder Polyisocyanats I mit einer mit Isocyanat reaktiven Verbindung erhältlich ist und eine mit Isocyanat reaktive Gruppe und mindestens zwei Isocyanatgruppen aufweist, mit einem Di- oder Polyisocyanat II, das von Di- oder Polyisocyanat I verschieden ist, umgesetzt wird.

Ein Gegenstand der Erfindung ist somit ein Verfahren zur Herstellung von hochfunktionellen Polyisocyanaten, umfassend
(i) Herstellen eines Additionsproduktes (A), das eine mit Isocyanat reaktive Gruppe und mindestens zwei Isocyanatgruppen enthält, durch Umsetzen eines
   (a) Di- oder Polyisocyanats I mit
   (b1) Verbindungen mit mindestens drei mit Isocyanat reaktiven Gruppen oder
   (b2) Verbindungen mit zwei mit Isocyanat reaktiven Gruppen, oder Gemischen aus (b1) und (b2),
   wobei mindestens eine der Komponenten (a) oder (b) funktionelle Gruppen mit gegenüber den funktionellen Gruppen der anderen Komponente unterschiedlicher Reaktivität aufweist und wobei das Umsetzungsverhältnis so gewählt wird, dass im Mittel das Additionsprodukt (A) eine mit Isocyanat reaktive Gruppe enthält,
(ii) gegebenenfalls intermolekulare Additionsreaktion des Additionsprodukts (A) zu einem Polyadditionsprodukt (P), das im Mittel eine mit Isocyanat reaktive Gruppe und mehr als zwei Isocyanatgruppen enthält und
(iii) Umsetzen des Additionsproduktes (A) und/oder des Polyadditionsprodukts (P) mit einem Di- oder Polyisocyanat II, wobei Di- oder Polyisocyanat I und Di- oder Polyisocyanat II verschieden sind.

Ein weiterer Gegenstand der Erfindung sind die nach diesem Verfahren hergestellten hochfunktionellen Polyisocyanate.

Ein Gegenstand der Erfindung ist ferner die Verwendung der erfindungsgemäßen hochfunktionellen Polyisocyanate als Bausteine zur Herstellung von Lacken, Überzügen, Klebstoffen, Dichtmassen, Gießelastomeren oder Schaumstoffen und Polyadditionsprodukte, erhältlich unter Verwendung der erfindungsgemäßen hochfunktionellen Polyisocyanate.

Unter einem hochfunktionellen Polyisocyanat ist im Rahmen dieser Erfindung ein Polyisocyanat zu verstehen, das mindestens drei, bevorzugt mindestens fünf, mehr bevorzugt mindestens sechs freie Isocyanatgruppen aufweist. Die Anzahl der Isocyanatgruppen ist prinzipiell nach oben nicht beschränkt, jedoch können Polyisocyanate mit sehr hoher Anzahl an Isocyanatgruppen unerwünschte Eigenschaften, wie beispielsweise hohe Viskosität oder schlechte Löslichkeit, aufweisen. Die hochfunktionellen Polyisocyanate der vorliegenden Erfindung weisen zumeist nicht mehr als 100 Isocyanatgruppen, bevorzugt nicht mehr als 50 Isocyanatgruppen auf.

Als Di- und Polyisocyanate I kommen die aus dem Stand der Technik bekannten aliphatischen, cycloaliphatischen und aromatischen Isocyanate in Frage. Bevorzugte Di- oder Polyisocyanate I sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 4,4'-Methylenbis(cyclohexyl)-diisocyanat, Xylylendiisocyanat, Tetramethylxylylendiisocyanat, Dodecyldiisocyanat, Lysinalkylester-diisocyanat, wobei Alkyl für C₁ bis C₁₀ steht, 2,2,4- oder 2,4,4-Trimethyl-1,6-hexamethylen-diisocyanat, 1,4-Diisocyanatocyclohexan, 1,3- oder 1,4-Bis(isocyanatomethyl)cyclohexan oder 4-Isocyanatomethyl-1,8-octamethylendiisocyanat.

Besonders bevorzugt sind Di- oder Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis(cyclohexyl)diisocyanat und 4-Methyl-cyclohexan-1,3-diisocyanat (H-TDI).

Weiterhin sind Isocyanate besonders bevorzugt, deren NCO-Gruppen zunächst gleich reaktiv sind, bei denen sich jedoch durch Erstaddition eines Alkohols, Mercaptans oder Amins an einer NCO-Gruppe ein Reaktivitätsabfall bei der zweiten NCO-Gruppe induzieren läßt. Beispiele dafür sind Isocyanate, deren NCO-Gruppen über ein delokalisiertes Elektronensystem gekoppelt sind, z.B. 1,3-und 1,4-Phenylendiisocyanat, 1,5-Naphthylendiisocyanat, Diphenyldiisocyanat, Tolidindiisocyanat oder 2,6-Toluylendiisocyanat.

Als Di- und Polyisocyanate II kommen alle aus dem Stand der Technik bekannten aliphatischen, cycloaliphatischen und aromatischen Isocyanate in Frage. Neben den oben genannten Di- und Polyisocyanaten können weiterhin beispielsweise Oligo- oder Polyisocyanate verwendet werden, die sich aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Als Di- und Polyisocyanate II werden besonders bevorzugt verwendet 4,4'-Diphenylmethandiisocyanat, Mischungen aus Diphenylmethandiisocyanaten und höherkernigen Homologen des Diphenylmethandiisocyanats (Polymer-MDI), 1,3- und 1,4-Phenylendiisocyanat, 4-Isocyanatomethyl-1,8-octamethylendiisocyanat, Hexamethylendiisocyanat, Isocyanurat-, Uretdion-, Urethan-, Allophanat-, Iminooxadiazindion- oder Biuretgruppen aufweisende Oligomere aus Hexamethylendiisocyanat, Urethan-, Allophanat-, Carbodiimid- oder Uretonimingruppen aufweisende Oligomere aus MDI oder Urethan-, Allophanat-, Carbodiimid- oder Uretonimingruppen aufweisende Oligomere aus TDI.

Sowohl für die Di- und Polyisocyanate I als auch für die Di- und Polyisocyanate II können auch Mischungen der genannten Isocyanate verwendet werden.

Die bei der Herstellung des Additionsproduktes (A) verwendeten (b1) Verbindungen mit mindestens drei mit Isocyanat reaktiven Gruppen und verwendeten (b2) Verbindungen mit zwei mit Isocyanat reaktiven Gruppen sind aus Verbindungen ausgewählt, die Hydroxylgruppen, Mercaptogruppen oder Aminogruppen aufweisen. Bevorzugt sind Hydroxyl- und Aminogruppen.

In einer bevorzugten Ausführungsform enthalten die (b1) Verbindungen mit mindestens drei mit Isocyanat reaktiven Gruppen Verbindungen mit drei oder vier mit Isocyanat reaktiven Gruppen oder Gemische davon.

Ebenfalls können zur Herstellung des Additionsprodukts (A) (b1) Verbindungen mit mindestens drei mit Isocyanat reaktiven Gruppen und/oder (b2) Verbindungen mit zwei mit Isocyanat reaktiven Gruppen verwendet werden, die aus den oben genannten funktionellen Gruppen oder Gemischen davon ausgewählt sind und deren funktionelle Gruppen gegenüber NCO-Gruppen eine unterschiedliche Reaktivität aufweisen. Bevorzugt sind dabei Verbindungen mit mindestens einer primären und mindestens einer sekundären oder tertiären Hydroxylgruppe, mindestens einer Hydroxylgruppe und mindestens einer Mercaptogruppe oder mindestens einer Hydroxylgruppe und mindestens einer Aminogruppe im Molekül, da die Reaktivität der Aminogruppe gegenüber der Hydroxylgruppe bei der Umsetzung mit Isocyanat deutlich höher ist.

Weiterhin bevorzugt sind mit Isocyanat reaktive Verbindungen, deren mit Isocyanat reaktive funktionellen Gruppen zunächst gleich reaktiv sind, bei denen sich jedoch durch Addition mindestens eines Isocyanates ein Reaktivitätsabfall, bedingt durch sterische oder elektronische Einflüsse, bei den restlichen mit Isocyanat reaktiven Gruppen induzieren läßt. Dies ist beispielsweise bei der Verwendung von Trimethylolpropan oder Pentaerythrit als Komponente (b1) der Fall.

Beispiele für (b1) Verbindungen mit mindestens drei mit Isocyanat reaktiven Gruppen sind Glycerin, Trimethylolmethan, Trimethylolethan, Trimethylolpropan, 1,2,4-Butantriol, Tris(hydroxymethyl) aminomethan, Tris(hydroxyethyl)aminomethan, 2-Amino-1,3-propandiol, 2-Amino-2-methyl-1,3-propandiol, Diethanolamin, Dipropanolamin, Diisopropanolamin, Ethanolpropanolamin, Bis(aminoethyl) amin, Bis(aminopropyl)amin, Tris(aminoethyl)amin, Tris(aminopropyl)amin, Trisaminononan, Pentaerythrit, Bis(trimethylolpropan) oder Zucker, wie zum Beispiel Glucose, tri- oder tetrafunktionelle Polyether- oder Polyesterole. Dabei sind Glycerin, Trimethylolethan, Trimethylolpropan, 1,2,4-Butantriol, Pentaerythrit, Diethanolamin, Dipropanolamin und Tris(hydroxymethyl)aminomethan besonders bevorzugt.

Beispiele für (b2) Verbindungen mit zwei mit Isocyanat reaktiven Gruppen sind Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Hydroxypivalinsäureneopentylglykolester, Propan-1,2-dithiol, Butan-1,2-dithiol, Mercaptoethanol, Mercaptopropanol, Mercaptobutanol, Ethylendiamin, Toluylendiamin, Isophorondiamin, Cysteamin, Ethanolamin, N-Methylethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Aminopropanthiol oder difunktionelle Polyether- oder Polyesterole. Dabei sind 1,2-Propandiol, 1,2- und 1,3-Butandiol, Ethanolamin, Propanolamin, Mercaptoethanol, 4-Hydroxypiperidin und 1-Hydroxyethylpiperazin besonders bevorzugt.

Weiterhin sind auch Mischungen der genannten Verbindungen einsetzbar.

Bei der Herstellung des Additionsprodukts (A) ist es notwendig, das Verhältnis von Di- oder Polyisocyanat I zu (b1) Verbindungen mit mindestens drei mit Isocyanat reaktiven Gruppen oder (b2) Verbindungen mit zwei mit Isocyanat reaktiven Gruppen oder Gemischen aus (b1) und (b2) so einzustellen, dass das resultierende Additionsprodukt (A) im Mittel eine mit Isocyanat reaktive Gruppe und mindestens zwei NCO-Gruppen enthält.

Beispielsweise liegt bei der Herstellung des Additionsproduktes (A) aus einem Diisocyanat und einem dreiwertigen Alkohol das Umsetzungsverhältnis bei 2 : 1, veranschaulicht durch die allgemeine Formel 1, 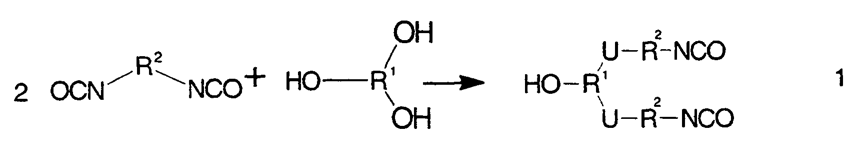 und bei der Herstellung des Additionsproduktes (A) aus einem Diisocyanat und einem vierwertigen Alkohol das Umsetzungsverhältnis bei 3 : 1, veranschaulicht durch die allgemeine Formel 2, 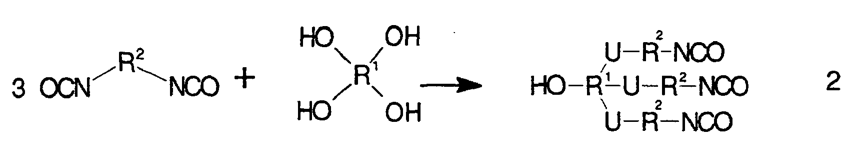 wobei in den Formeln 1 und 2 R¹ und R² einen organischen Rest und U eine Urethangruppe bedeuten.

Weiterhin kann die Herstellung des Additionsprodukts (A) zum Beispiel auch aus einem Triisocyanat und einer zweiwertigen, mit Isocyanat reaktiven Komponente (b2), veranschaulicht durch die allgemeine Formel 3 erfolgen, wobei das Umsetzungsverhältnis bei molar 1:1 liegt, R¹ und R² die gleiche Bedeutung wie in den Formeln 1 und 2 haben und Y zum Beispiel eine Harnstoffgruppe bedeutet.

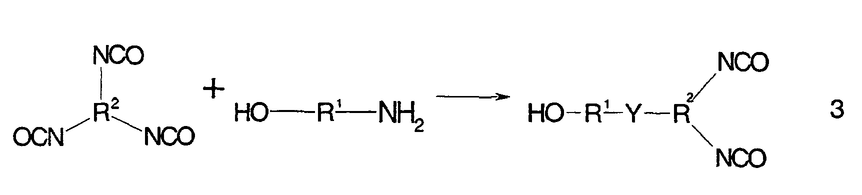

Werden zur Komponente (b1) zusätzlich (b2) Verbindungen mit zwei mit Isocyanat reaktiven Gruppen zugegeben, so bewirkt dies eine Verlängerung der Ketten. Wie beispielsweise in der allgemeinen Formel 4 veranschaulicht, muss für jedes Mol der Komponente (b2) ein weiteres Mol an Di- oder Polyisocyanat I zugegeben werden.

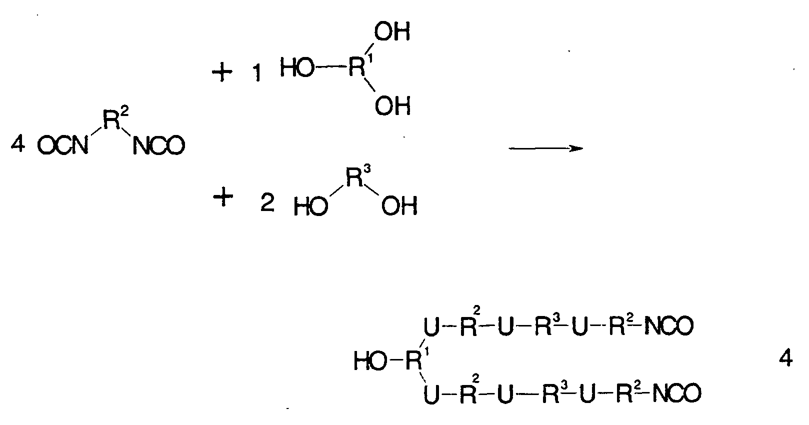

In Formel 4 bedeutet R³ einen organischen Rest, R¹, R² und U sind wie vorstehend beschrieben definiert.

Die Umsetzung zum Additionsprodukt (A) erfolgt üblicherweise bei einer Temperatur von -20 bis 120°C, bevorzugt bei -10 bis 100°C. In einer bevorzugten Ausführungsform wird das Di- oder Polyisocyanat I vorgelegt und die Komponenten (b1) oder (b2) oder das Gemisch aus (b1) und (b2) zugegeben. Die Additionsprodukte (A) sind üblicherweise nicht über einen längeren Zeitraum stabil und werden daher bevorzugt direkt mit dem Di- oder Polyisocyanat II umgesetzt.

In einer bevorzugten Ausführungsform kann das Additionsprodukt (A) durch eine intermolekulare Additionsreaktion des Additionsproduktes (A) in ein Polyadditionsprodukt (P) überführt werden. Hierbei addiert sich die mit Isocyanat reaktive Gruppe des Additionsproduktes (A) an eine der Isocyanatgruppen eines weiteren Additionsproduktes (A). Die Anzahl der Additionsprodukte (A), die sich zu einem Polyadditionsprodukt (P) addieren, ist im allgemeinen nicht beschränkt. Aus praktischen Gesichtspunkten wird üblicherweise die Additionsreaktion abgebrochen, bevor das Polyadditionsprodukt (P), z.B. aufgrund eines zu hohen Molekulargewichts oder aus sterischen Gründen, nachteilige Eigenschaften, wie beispielsweise eine zu hohe Viskosität oder eine zu schlechte Löslichkeit, aufweist.

Aufgrund der Beschaffenheit der Additionsprodukte (A) ist es möglich, daß aus der Additionsreaktion verschiedene Polyadditionsprodukte (P) resultieren können, die Verzweigungen aber keine Vernetzungen aufweisen. Ferner weisen die Polyadditionsprodukte (P) eine mit Isocyanat reaktive Gruppe und mehr als zwei Isocyanatgruppen auf. Die Anzahl der Isocyanatgruppen ergibt sich dabei aus der Beschaffenheit der eingesetzten Additionsprodukte (A) und dem Polyadditionsgrad.

Beispielsweise kann ein Additionsprodukt (A) gemäß der allgemeinen Formel 1 durch dreifache intermolekulare Addition zu zwei verschiedenen Polyadditionsprodukten (P), die in den allgemeinen Formeln 5 und 6 wiedergegeben werden, reagieren.

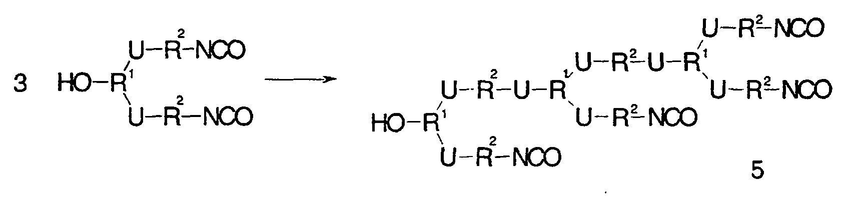

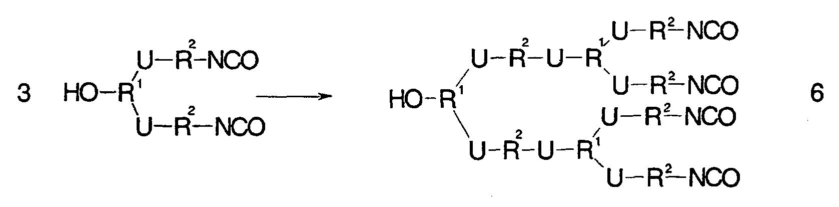

In Formel 5 und 6 sind R¹, R² und U wie vorstehend definiert.

Die intermolekulare Polyadditionsreaktion eines Additionsproduktes (A) zu einem Polyadditionsprodukt (P) kann üblicherweise in situ nach Beendigung der Reaktion zu dem Additionsprodukt (A) durch eine Temperaturerhöhung durchgeführt werden.

Weiterhin kann auch ein geeigneter Katalysator oder ein geeignetes Katalysatorgemisch zugegeben werden. Geeignete Katalysatoren sind im allgemeinen Verbindungen, die Urethan-Reaktionen katalysieren, zum Beispiel Amine, Ammoniumverbindungen, Aluminium-, Zinn-, Titan-, Zirkon-, oder Wismut-organische Verbindungen.

Beispielsweise können genannt werden Diazabicyclooctan (DABCO), Diazabicyclononen (DBN) und Diazabicycloundecen (DBU), Titantetrabutylat, Dibutylzinn-dilaurat, Zirkonacetylacetonat oder Gemische davon.

Die Zugabe des Katalysators erfolgt im allgemeinen in einer Menge von 50 bis 10000, bevorzugt von 100 bis 5000 Gew. ppm bezogen auf die Menge des eingesetzten Isocyanats.

Ferner ist es auch möglich, sowohl durch Zugabe eines geeigneten Katalysators, als auch durch Wahl einer geeigneten Temperatur die intermolekulare Polyadditionsreaktion zu steuern.

Zum Abbruch der intermolekularen Polyadditionsreaktion gibt es verschiedene Möglichkeiten. Beispielsweise kann die Temperatur auf einen Bereich abgesenkt werden, in dem die Additionsreaktion zum Stillstand kommt und das Additionsprodukt (A) oder das Polyadditionsprodukt (P) lagerstabil ist.

In einer bevorzugten Ausführungsform wird, sobald aufgrund der intermolekularen Additionsreaktion des Additionsproduktes (A) ein Polyadditionsprodukt (P) mit gewünschten Polyadditionsgrad vorliegt, dem Polyadditionsprodukt (P) zum Abbruch der Polyadditionsreaktion ein Di- oder Polyisocyanat II zugegeben. Durch Umsetzung des Polyadditionsprodukts (P) mit dem Di- oder Polyisocyanat II erhält man die erfindungsgemäßen hochfunktionellen Polyisocyanate.

Wird beispielsweise zu einem Polyadditionsprodukt (P) der allgemeinen Formel 5 ein Diisocyanat II im Verhältnis 2 :1 gegeben, so ist ein erfindungsgemäßes hochfunktionelles Polyisocyanat der allgemeinen Formel 7 erhältlich.

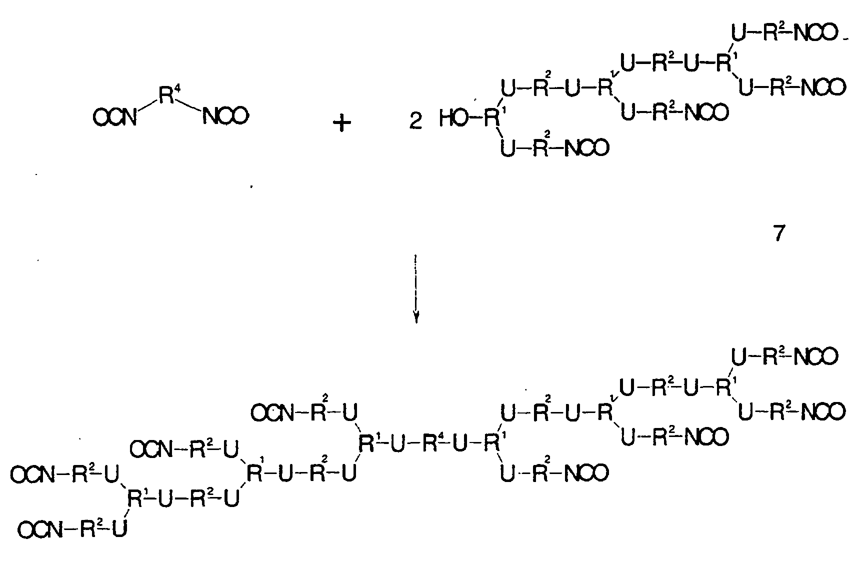

In Formel 7 sind R¹, R² und U wie vorstehend definiert und R⁴ bedeutet einen organischen Rest, der vorzugsweise nicht mit R² identisch ist.

Alternativ kann das Di- oder Polyisocyanat II auch zu einem Additionsprodukt (A) gegeben werden, das noch nicht in einer intermolekularen Additionsreaktion zu einem Polyadditionsprodukt (P) umgesetzt wurde.

Es ist jedoch zumeist technisch vorteilhaft, die intermolekulare Additionsreaktion zumindest in geringen Umfang durchzuführen, da gegebenenfalls im Additionsprodukt (A) noch geringe Mengen Di- oder Polyisocyanat I als Verunreinigung enthalten sein können und diese Verunreinigungen dann durch die intermolekulare Polyadditionsreaktion in das Polyadditionsprodukt (P) mit eingebaut werden können.

Weiterhin ist es möglich, die mit Isocyanat reaktiven Komponenten (b1) oder (b2) im geringen molaren Überschuss einzusetzen, um eine möglichst vollständige Reaktion des Isocyanates I zu erwirken. Vorteilhaft ist bei beiden Verfahrensweisen, daß so eine eventuell aufwendige Abtrennung nicht umgesetzten Isocyanates I entfällt.

Bei der Umsetzung des Additionsproduktes (A) und/oder des Polyadditionsprodukts (P) mit dem Di- oder Polyisocyanat II wird üblicherweise mindestens eine Isocyanatgruppe des Di- oder Polyisocyanats II mit der mit Isocyanat reaktiven Gruppe des Additionsprodukts (A) oder des Polyadditionsprodukts (P) zur Reaktion gebracht. In einer bevorzugten Ausführungsform werden mindestens 10 %, insbesondere mindestens 40 % und besonders bevorzugt 50 - 100% der freien Isocyanatgruppen des Di- oder Polyisocyanats II mit einer entsprechenden Anzahl an Äquivalenten eines Additionsproduktes (A) und/oder Polyadditionsprodukts (P) zu dem erfindungsgemäßen hochfunktionellen Polyisocyanat umgesetzt.

In einer weiteren Ausführungsform wird zuerst eine Isocyanatgruppe eines Di- oder Polyisocyanats II mit einem Additionsprodukt (A1) oder einem Polyadditionsprodukt (P1) umgesetzt, anschließend wird mindestens eine weitere Isocyanatgruppe des Di- oder Polyisocyanats II mit einem Additionsprodukt (A2) oder einem Polyadditionsprodukt (P2) umgesetzt, wobei die Additionsprodukte (A1) und (A2) bzw. die Polyadditionsprodukte (P1) und (P2) nicht identisch sind. Für diese Ausführungsform wird vorzugsweise ein Di- oder Polyisocyanat II verwendet, das Isocyanatgruppen mit unterschiedlicher Reaktivität gegenüber den mit Isocyanat reaktiven Gruppen der Komponenten (A) und/oder (P) aufweist.

Die Herstellung der erfindungsgemäßen hochfunktionellen Polyisocyanate erfolgt zumeist in Lösungsmitteln. Dabei können im allgemeinen alle Lösungsmittel verwendet werden, die gegenüber den jeweiligen Edukten inert sind. Bevorzugt verwendet werden organische Lösungsmittel, wie zum Beispiel Diethylether, Tetrahydrofuran, Aceton, Butanon-2, Methylisobutylketon, Essigester, Butylacetat, Benzol, Toluol, Chlorbenzol, Xylol, Methoxyethylacetat, Methoxypropylacetat, Dimethylformamid, Dimethylacetamid, oder Solventnaphtha.

Die Herstellung der erfindungsgemäßen hochfunktionellen Polyisocyanate erfolgt zumeist in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Die durch das erfindungsgemäße Verfahren erhaltenen hochfunktionellen Polyisocyanate können bei Bedarf auch hydrophobiert, hydrophiliert oder umfunktionalisiert werden. Dazu können die NCO-terminierten Produkte z.B. mit Fettalkoholen, Fettaminen, Hydroxycarbonsäuren, Hydroxysulfonsäuren, Aminosäuren oder Acrylatgruppen enthaltenden Monoalkoholen, wie Hydroxyethylacrylat oder Hydroxyethylmethacrylat umgesetzt oder teilumgesetzt werden.

Die Isocyanatgruppen der erfindungsgemäßen hochfunktionellen Polyisocyanate können auch in verkappter Form vorliegen. Als Verkappungsmittel für NCO-Gruppen eignen sich zum Beispiel Oxime, Phenole, Imidazole, Triazole, Pyrazole, Pyrazolinone, Diketopiperazine, Caprolactam, Malonsäureester oder Verbindungen, wie sie genannt sind in den Veröffentlichungen von Z. W. Wicks, Prog. Org. Coat. 3 (1975), 73 - 99 und Prog. Org. Coat. 9 (1981), 3 - 28 sowie in Houben-Weyl, Methoden der Organischen Chemie, Band XIV/2, 61 ff., Georg Thieme Verlag, Stuttgart 1963.

Ihm Rahmen dieser Erfindung ist es möglich, die gewünschten Eigenschaften der erfindungsgemäßen hochfunktionellen Polyisocyanate durch gezielte Wahl der entsprechenden Edukte, insbesondere der Di- oder Polyisocyanate I und II, zu erhalten. So ist es mit den hochfunktionellen Polyisocyanaten der vorliegenden Erfindung beispielsweise möglich, positive Eigenschaften von üblichen aromatischen Isocyanaten mit positiven Eigenschaften von üblichen aliphatischen Isocyanaten zu verbinden oder auch die positiven Eigenschaften von üblichen aliphatischen Isocyanaten mit den positiven Eigenschaften von üblichen cycloaliphatischen Isocyanaten zu kombinieren.

Wird beispielsweise ein erfindungsgemäßes hochfunktionelles Polyisocyanat auf Basis von HDI-Isocyanurat-Oligomer als Isocyanat II und TDI als Isocyanat I hergestellt, so kann dieses Polyisocyanat-Molekül je nach Wahl der Menge des Isocyanate II sowohl aromatische als auch aliphatische NCO-Gruppen aufweisen, die sich in ihrer Reaktivität deutlich unterscheiden. Diese unterschiedlichen NCO-Reaktivitäten innerhalb eines Polyisocyanat-Moleküls können dann technisch vorteilhaft genutzt werden.

Wird beispielsweise ein erfindungsgemäßes hochfunktionelles Polyisocyanat auf Basis von HDI-Isocyanurat-Oligomer und IPDI oder IPDI-Trimer hergestellt, so weist ein mit Hilfe dieses Polyisocyanats hergestellter PU-Lack sowohl Eigenschaften wie Elastizität und Flexibilität als auch Eigenschaften wie Härte, Kratzbeständigkeit und Chemikalienresistenz auf.

Ein weiterer Vorteil der vorliegenden Erfindung ist, dass die Funktionalitäten von herkömmlichen, technischen Isocyanaten deutlich erhöht werden können. Wird beispielsweise ein handelsübliches Polymer-MDI mit einer mittleren NCO-Funktionalität von 2,5 mit einem Additionsprodukt (A) aus zwei Mol 2,4-TDI und einem Mol Glycerin umgesetzt, so liegt die mittlere Funktionalität des resultierenden Isocyanats bei 5.

Ein Vorteil der Isocyanate mit hoher Funktionalität ist, dass der Aufbau eines Netzwerks nicht, wie üblich, statistisch erfolgt, sondern Strukturen mit definierter Zusammensetzung und definierten Eigenschaften in das Netzwerk eingebaut werden.

Ein weiterer Vorteil des erfindungsgemäßen Verfahren liegt in seiner Wirtschaftlichkeit. Sowohl die Umsetzung von Di- oder Polyisocyanat I zu einem Additionsprodukt (A) und/oder Polyadditionsprodukt (P) als auch die Reaktion von (A) oder (P) mit einem Di- oder Polyisocyanat II zu einen hochfunktionellen Polyisocyanat kann in einer Reaktionsvorrichtung erfolgen, was technisch und wirtschaftlich vorteilhaft ist.

Die vorliegende Erfindung soll anhand der nachfolgenden Beispiele näher erläutert werden.

### Beispiele

### Beispiel 1:

### Herstellung eines Additionsproduktes (A) aus IPDI und Trimethylolpropan mit einer mittleren OH-Funktionalität von 1 und einer mittleren NCO-Funktionalität von 2

1000 g IPDI wurden unter Stickstoffbedeckung vorgelegt und innerhalb 1 min 300g TMP, gelöst in 1300 g Butylacetat, unter gutem Rühren zugegeben. Nach Zudosierung von 0,2 g Dibutylzinn-dilaurat wurde die Reaktionsmischung auf 50°C erwärmt, bei dieser Temperatur gerührt und die Abnahme des NCO-Gehaltes titrimetrisch verfolgt. Bei Erreichen eines NCO-Gehaltes von 7,3 Gew.% wies das Reaktionsprodukt eine mittlere Funktionalität bezüglich NCO von 2 und bezüglich OH von 1 auf.

### Beispiel 2:

### Herstellung eines Additionsproduktes (A) aus IPDI-Isocyanurat und 1,3-Butandiol mit einer mittleren OH-Funktionalität von 1 und einer mittleren NCO-Funktionalität von 2

1000 g IPDI-Isocyanurat wurden in 1000 g Essigsäureethylester gelöst und unter gutem Rühren innerhalb 1 min 136 g 1,3-Butandiol, gelöst in 136 g Essigsäureethylester, zugegeben. Nach Zudosierung von 0,4 g Dibutylzinn-dilaurat wurde die Reaktionsmischung bei 25°C gerührt und die Abnahme des NCO-Gehaltes titrimetrisch verfolgt. Bei Erreichen eines NCO-Gehaltes von 5,4 Gew.% wies das Reaktionsprodukt eine mittlere Funktionalität bezüglich NCO von 2 und bezüglich OH von 1 auf.

### Beispiel 3:

### Herstellung eines Additionsproduktes (A) aus 2,4-TDI und Trimethylol-propan mit einer mittleren OH-Funktionalität von 1 und einer mittleren NCO-Funktionalität von 2

1000 g 2,4-TDI wurden unter Stickstoffbedeckung vorgelegt und unter gutem Rühren innerhalb 1 min 385 g TMP, gelöst in 1385 g Butylacetat, zugegeben. Nach Zudosierung von 0,1 g Dibutylzinn-dilaurat wurde die Reaktionsmischung bei 40°C gerührt und die Abnahme des NCO-Gehaltes titrimetrisch verfolgt. Bei Erreichen eines NCO-Gehaltes von 8,7 Gew.% wies das Reaktionsprodukt eine mittlere Funktionalität bezüglich NCO von 2 und bezüglich OH von 1 auf.

### Beispiel 4:

### Herstellung eines Polyadditionsproduktes (P) aus IPDI und Glycerin mit einer mittleren OH-Funktionalität von 1 und einer mittleren NCO-Funktionalität von 3

960 g IPDI wurden unter Stickstoffbedeckung vorgelegt und eine Mischung aus 1102 g Aceton und 58 g DMAc zugegeben. Innerhalb von 1 min wurden anschließend 200g Glycerin unter gutem Rühren zugetropft. Nach Zudosierung von 0,2 g Dibutylzinn-dilaurat wurde die Reaktionsmischung zunächst 1 h bei Raumtemperatur, anschließend bei 40°C gerührt und die Abnahme des NCO-Gehaltes titrimetrisch verfolgt. Bei Erreichen eines NCO-Gehaltes von 5,9 Gew.% wies das Reaktionsprodukt eine mittlere Funktionalität bezüglich NCO von 3 und bezüglich OH von 1 auf.

### Beispiel 5:

### Herstellung eines Polyadditionsproduktes (P) aus IPDI und Trimethylol-propan mit einer mittleren OH-Funktionalität von 1 und einer mittleren NCO-Funktionalität von 4

1000 g IPDI wurden unter Stickstoffbedeckung vorgelegt und unter gutem Rühren innerhalb 1 min 300g TMP, gelöst in 1300 g Butylacetat, zugegeben. Nach Zudosierung von 0,2 g Dibutylzinn-dilaurat wurde die Reaktionsmischung bei 50°C gerührt und die Abnahme des NCO-Gehaltes titrimetrisch verfolgt. Bei Erreichen eines NCO-Gehaltes von 4,8 Gew.% wies das Reaktionsprodukt eine mittlere Funktionalität bezüglich NCO von 4 und bezüglich OH von 1 auf.

### Beispiel 6:

### Herstellung eines Polyadditionsproduktes (P) aus IPDI und Trimethylol-propan mit einer mittleren OH-Funktionalität von 1 und einer mittleren NCO-Funktionalität von 10

1000 g IPDI wurden unter Stickstoffbedeckung vorgelegt und innerhalb 1 min 300g TMP, gelöst in 1300 g Butylacetat, unter gutem Rühren zugegeben. Nach Zudosierung von 0,2 g Dibutylzinn-dilaurat wurde die Reaktionsmischung bei 50°C gerührt und die Abnahme des NCO-Gehaltes titrimetrisch verfolgt. Bei Erreichen eines NCO-Gehaltes von 4,0 Gew.% wies das Reaktionsprodukt eine mittlere Funktionalität bezüglich NCO von 10 und bezüglich OH von 1 auf.

### Beispiel 7:

### Herstellung eines aliphatischen Polyisocyanats mit einer mittleren NCO-Funktionalität von 7,1

Dem Additionsprodukt aus Beispiel 1 wurden direkt nach der Herstellung 567 g BASONAT HI 100, gelöst in 567 g Butylacetat zugesetzt, die Mischung auf 70°C erwärmt und 3 h bei dieser Temperatur gerührt. Das Endprodukt wies einen NCO-Gehalt von 5,7 Gew.% und eine Viskosität von 1300 mPas, gemessen bei 25°C, auf. Die mittlere Molmasse des Polyisocyanats betrug 2696 g/mol, die mittlere Funktionalität betrug 7,1.

### Beispiel 8:

### Herstellung eines aliphatischen Polyisocyanats mit einer mittleren NCO-Funktionalität von 7,0

Dem Additionsprodukt aus Beispiel 1 wurden direkt nach der Herstellung 650 g BASONAT HI 100, gelöst in 650 g Butylacetat zugesetzt, die Mischung auf 70°C erwärmt und 3 h bei dieser Temperatur gerührt. Das Endprodukt wies einen NCO-Gehalt von 5,9 Gew.% und eine Viskosität von 920 mPas, gemessen bei 25°C, auf. Die mittlere Molmasse des Polyisocyanats betrug 2609 g/mol, die mittlere Funktionalität betrug 7,0.

### Beispiel 9:

### Herstellung eines aliphatischen Polyisocyanats mit einer mittleren NCO-Funktionalität von 6,7

Dem Additionsprodukt aus Beispiel 1 wurden direkt nach der Herstellung 867 g BASONAT HI 100, gelöst in 867 g Butylacetat zugesetzt, die Mischung auf 70°C erwärmt und 3 h bei dieser Temperatur gerührt. Das Endprodukt wies einen NCO-Gehalt von 6,3 Gew.% und eine Viskosität von 300 mPas, gemessen bei 25°C, auf. Die mittlere Molmasse des Polyisocyanats betrug 2313 g/mol, die mittlere Funktionalität betrug 6,7.

### Beispiel 10:

### Herstellung eines aliphatischen Polyisocyanats mit einer mittleren NCO-Funktionalität von 13,8

Dem Polyadditionsprodukt aus Beispiel 5 wurden direkt nach der Herstellung 286 g BASONAT HI 100, gelöst in 286 g Butylacetat zugesetzt, die Mischung auf 70°C erwärmt und 3 h bei dieser Temperatur gerührt. Das Endprodukt wies einen NCO-Gehalt von 4,9 Gew.% und eine Viskosität von 9000 mPas, gemessen bei 25°C, auf. Die mittlere Molmasse des Polyisocyanats betrug 6445 g/mol, die mittlere Funktionalität betrug 13,8.

### Beispiel 11:

### Herstellung eines aliphatischen Polyisocyanats mit einer mittleren NCO-Funktionalität von 5,4

Dem Additionsprodukt aus Beispiel 1 wurden direkt nach der Herstellung 640 g BASONAT P LR 8926, gelöst in 640 g Butylacetat zugesetzt, die Mischung auf 70°C erwärmt und 3 h bei dieser Temperatur gerührt. Das Endprodukt wies einen NCO-Gehalt von 5,4 Gew.% und eine Viskosität von 230 mPas, gemessen bei 25°C, auf. Die mittlere Molmasse des Polyisocyanats betrug 2111 g/mol, die mittlere Funktionalität betrug 5,4.

### Beispiel 12:

### Herstellung eines aliphatischen Polyisocyanats mit einer mittleren NCO-Funktionalität von 3,9

Dem Additionsprodukt aus Beispiel 1 wurden direkt nach der Herstellung 247 g HDI, gelöst in 247 g Butylacetat zugesetzt, die Mischung auf 70°C erwärmt und 3 h bei dieser Temperatur gerührt. Das Endprodukt wies einen NCO-Gehalt von 7,0 Gew.% und eine Viskosität von 120 mPas, gemessen bei 25°C, auf. Die mittlere Molmasse des Polyisocyanats betrug 1279 g/mol, die mittlere Funktionalität betrug 3,9.

### Beispiel 13:

### Herstellung eines aliphatischen Polyisocyanats mit einer mittleren NCO-Funktionalität von 6,8

Dem Additionsprodukt aus Beispiel 2 wurden direkt nach der Herstellung 580 g BASONAT HI 100, gelöst in 580 g Essigsäureethylester zugesetzt, die Mischung auf 40°C erwärmt und 6 h bei dieser Temperatur gerührt. Das Endprodukt wies einen NCO-Gehalt von 4,6 Gew.% und eine Viskosität von 300 mPas, gemessen bei 25°C, auf. Das Produkt wurde anschließend vom Lösungsmittel befreit und im Vakuum bei Raumtemperatur getrocknet. Die Glastemperatur (Tg) wurde mittels differentieller Thermoanalyse mit 66°C bestimmt. Die mittlere Molmasse des Polyisocyanats betrug 3031 g/mol, die mittlere Funktionalität betrug 6,8.

### Beispiel 14:

### Herstellung eines aliphatisch-aromatischen Polyisocyanats mit einer mittleren NCO-Funktionalität von 6,6

Dem Additionsprodukt aus Beispiel 3 wurden direkt nach der Herstellung 1100 g BASONAT HI 100, gelöst in 1100 g Butylacetat zugesetzt, die Mischung auf 60°C erwärmt und 3 h bei dieser Temperatur gerührt. Das Endprodukt wies einen NCO-Gehalt von 7,4 Gew.% und eine Viskosität von 60 mPas, gemessen bei 25°C, auf. Die mittlere Molmasse des Polyisocyanats betrug 2097 g/mol, die mittlere Funktionalität betrug 6,6.

### Beispiel 15:

### Herstellung eines aliphatisch-aromatischen Polyisocyanats mit einer mittleren NCO-Funktionalität von 3,7

Dem Additionsprodukt aus Beispiel 1 wurden direkt nach der Herstellung 560 g 4,4'-MDI, gelöst in 560 g Butylacetat zugesetzt, die Mischung auf 60°C erwärmt und 3 h bei dieser Temperatur gerührt. Das Endprodukt wies einen NCO-Gehalt von 7,5 Gew.% und eine Viskosität von 100 mPas, gemessen bei 25°C, auf. Die mittlere Molmasse des Polyisocyanats betrug 1233 g/mol, die mittlere Funktionalität betrug 3,7.

### Beispiel 16:

### Herstellung eines aromatischen Polyisocyanats mit einer mittleren NCO-Funktionalität von 4,4

Dem Additionsprodukt aus Beispiel 3 wurden direkt nach der Herstellung 780 g LUPRANAT M 20 W, gelöst in 780 g Butylacetat zugesetzt, die Mischung auf 60°C erwärmt und 3 h bei dieser Temperatur gerührt. Das Endprodukt wies einen NCO-Gehalt von 8,9 Gew.% und eine Viskosität von 30 mPas, gemessen bei 25°C, auf. Die mittlere Molmasse des Polyisocyanats betrug 1277 g/mol, die mittlere Funktionalität betrug 4,4.

### Prüfung der erfindungsgemäßen hochfunktionellen Polyisocyanate als Vernetzerkomponenten in Polyurethan-Lacken

### Prüfung der hochfunktionellen Polyisocyanate als Härter in Polyurethan-Lacksystemen

Die erfindungsgemäßen Polyisocyanate, sowie verschiedene Polyisocyanathärter (BASONAT HI 100, BASF; VESTANAT IPDI T 1890, Degussa-Hüls) als Vergleich, wurden mit einer Mischung hydroxyfunktioneller Acrylatharze (Acrylatharz-Mischung 1) entsprechend den stöchiometrischen NCO/OH-Verhältnissen gemischt und mit Butylacetat auf eine Applikationsviskosität von 20 s (DIN 53 211 Becher 4 mm Auslaufdüse) eingestellt.

Mit einem Filmziehrahmen wurden auf Glasplatten Beschichtungen mit einer Naßfilmdicke von 200 µm aufgetragen. Die so erhaltenen Klarlacke wurden unter Normklima gehärtet.

| Klarlack-Nr. | 1 (Vgl.) | 2 (Vgl.) | 3 | 4 | 5 | 6 |
|---|---|---|---|---|---|---|
| Polyisocyanat-Härter | Basonat HI 100 | Vestanat IPDI T1890 | Bsp. 9 | Bsp. 10 | Bsp. 7 | Bsp. 8 |
| Acrylatharz | Acrylatharz-Mischung 1 | | | | | |

| Lackeigenschaften | | | | | | |
|---|---|---|---|---|---|---|
| Tage | Pendeldämpfungsanstieg bei Raumtemperatur [Schwingungen] | | | | | |
| 0 | 0 | 0 | 0 | 0 | 0 | 0 |
| 0,2 | 3 | 13 | 21 | 38 | 25 | 15 |
| 1 | 62 | 73 | 84 | 86 | 85 | 84 |
| 7 | 122 | 127 | 125 | 133 | 130 | 126 |
| 7 Tage bei 23°C + 15h 60°C | 123 | 125 | 136 | 141 | 145 | 141 |

| Härteprüfung mit dem Fischer-Scope | | | | | | |
|---|---|---|---|---|---|---|
| Die Lacke werden mit einem Filmziehrahmen (Naßschichtdicke 200 µ) auf Gradientenofenbleche aufgezogen, 15 min abgelüftet und danach 23 min bei 140°C eingebrannt. | | | | | | |
| Fischerscope: Härte HU [N / mm2] | 189 | 259 | 269 | 284 | 270 | 266 |

Acrylatharz-Mischung 1: LUMITOL H 136 und LUMITOL M 100, Mischungsverhältnis 4:6

Die Mischung besitzt einen Festgehalt von 64% und eine OH-Zahl von 116 mg KOH/g.

Die Klarlacke 3-6 mit den erfindungsgemäßen hochfunktionellen Polyisocyanaten als Härter weisen gegenüber den Vergleichsversuchen 1 und 2 deutlich verbesserte Härtungseigenschaften und Endhärten auf.

Prüfung von Mischungen aus Standard-Isocyanat-Härtern und den erfindungsgemäßen hochfunktionellen Polyisocyanaten in Polyurethan-Lacksystemen

Aus erfindungsgemäßen Polyisocyanaten wurden mit einem HDI-Polyisocyanat (BASONAT HI 100) in verschiedenen Verhältnissen Misch-härter hergestellt, die mit der Acrylatharz-Mischung 1 entsprechend den stöchiometrischen NCO/OH-Verhältnissen gemischt und mit Butylacetat auf eine Applikationsviskosität von 20 s (DIN 53 211 Becher 4 mm Auslaufdüse) eingestellt wurden.

Vergleichend wurden Klarlacke auf Basis eines Mischhärters VESTANAT IPDI T 1890 / BASONAT HI 100 geprüft.

Die zu prüfenden Beschichtungen wurden mit einem Filmziehrahmen auf Glasplatten mit einer Naßfilmdicke von 200 µm aufgetragen. Das Trocknungsverhalten der so erhaltenen Klarlacke wurde unter Normklima geprüft.

| | Vergleichsversuche | | | | | Versuche mit Härtern auf Basis von erfindungsgemäßen Polyisocyanaten | | | |
|---|---|---|---|---|---|---|---|---|---|
| Klarlack-Nr. | 7 | 8 | 9 | 10 | 11 | 12 | 13 | 14 | 15 |
| Misch-Härter | Basonat HI 100 | Vestanat IPDI T 1890 L | | | | Polyisocyanat aus Beispiel 9 | | | |
| %-Anteil Isocyanat (fest) | 0 | 33 | 50 | 75 | 100 | 33 | 50 | 75 | 100 |
| %-Anteil Basonat HI 100 (fest) | 100 | 67 | 50 | 25 | 0 | 67 | 50 | 25 | 0 |
| Acrylatharz | Acrylatharz-Mischung 1 | | | | | | | | |

| Lackeigenschaften | | | | | | | | | |
|---|---|---|---|---|---|---|---|---|---|
| Sandtrocknung [h] | 4,0 | 3,5 | 2,8 | 2,2 | 1,0 | 2,3 | 1,9 | 1,5 | 1,0 |
| Durchtrocknung [h] | 4,5 | 5,0 | 5,0 | 8,0 | 8,5 | 3,5 | 3,5 | 4,5 | 5,0 |

| Härteprüfung mit dem Fischer-Scope | | | | | | | | | |
|---|---|---|---|---|---|---|---|---|---|
| Die Lacke werden mit einem Filmziehrahmen (Naßschichtdicke 200 µ) auf Gradientenofenbleche aufgezogen, 15 min abgelüftet und danach 23 min bei 140°C eingebrannt. | | | | | | | | | |
| Fischerscope: Härte HU [N / mm2] | 189 | 201 | 217 | 224 | 259 | 213 | 230 | 246 | 269 |

Die Klarlacke mit den Härtern 12-15 weisen gegenüber den Lacken aus den Vergleichsversuchen 7-11 deutlich verbesserte Trocknungseigenschaften und Härten auf.

LUMITOL^{®} H 136, BASF: Festgehalt = 70 %, OH-Zahl = 135 mg KOH/g.

LUMITOL^{®} M 100, BASF: Festgehalt = 60 %, OH-Zahl = 100 mg KOH/g, speziell für IPDI-Härter geeignet.

BASONAT^{®} HI 100, BASF: HDI-Polyisocyanat, Viskosität ca. 3200 mPas, Festgehalt = 100 %, NCO-Gehalt = 22 Gew.%.

BASONAT^{®} P LR 8926, BASF: HDI-Polyisocyanat, Viskosität ca. 350 mPas, Festgehalt = 100 %, NCO-Gehalt = 19,5 Gew.%.

VESTANAT^{®} IPDI T 1890, Degussa-Hüls: IPDI-Isocyanurat, Festgehalt = 70 %, NCO-Gehalt = 12 Gew.%.

LUPRANAT^{®} M 20 W, BASF: Polymer-MDI, Viskosität ca. 200 mPas, Festgehalt = 100%, NCO-Gehalt = 31 Gew.%.

## Patentansprüche

1. Verfahren zur Herstellung von hochfunktionellen Polyisocyanaten, umfassend
(i) Herstellen eines Additionsproduktes (A), das eine mit Isocyanat reaktive Gruppe und mindestens zwei Isocyanatgruppen enthält, durch Umsetzen eines
(a) Di- oder Polyisocyanats I mit
(b1) Verbindungen mit mindestens drei mit Isocyanat reaktiven Gruppen oder
(b2) Verbindungen mit zwei mit Isocyanat reaktiven Gruppen oder Gemischen aus (b1) und (b2),
wobei mindestens eine der Komponenten (a) oder (b) funktionelle Gruppen mit gegenüber den funktionellen Gruppen der anderen Komponente unterschiedlicher Reaktivität aufweist und wobei das Umsetzungsverhältnis so gewählt wird, dass im Mittel das Additionsprodukt (A) eine mit Isocyanat reaktive Gruppe enthält,
(ii) gegebenenfalls intermolekulare Additionsreaktion des Additionsprodukts (A) zu einem Polyadditionsprodukt (P), das im Mittel eine mit Isocyanat reaktive Gruppe und mehr als zwei Isocyanatgruppen enthält und
(iii) Umsetzen des Additionsproduktes (A) und/oder des Polyadditionsproduktes (P) mit einem Di- oder Polyisocyanat II, wobei das Di- oder Polyisocyanat I und Di- oder Polisocyanat II verschieden sind.

2. Verfahren nach Anspruch 1, **dadurch gekennzeichnet, dass** als Di- oder Polyisocyanat I Tetramethylendiisocyanat, Tetramethylendiisocyanat-Trimer, Hexamethylendiisocyanat, Hexamethylendiisocyanat-Trimer, Dodecyldiisocyanat, Isophorondiisocyanat-Trimer, 4-Isocyanatomethyl-1,8-octamethylendiisocyanat, 4,4'-Diphenylmethandiisocyanat oder ein Gemisch daraus verwendet wird.

3. Verfahren nach Anspruch 1, **dadurch gekennzeichnet, dass** das Di- oder Polyisocyanat I Isocyanatgruppen unterschiedlicher Reaktivität aufweist und aus 2,4-Toluylendiisocyanat, 2,6-Toluylendiisocyanat, 2,4'-Diphenylmethandiisocyanat, 1,3-und 1,4-Phenylendiisocyanat, 1,5-Naphthylendiisocyanat, Tolidindiisocyanat, Triisocyanatotoluol, Diphenyldiisocyanat, Isophorondiisocyanat, 2-Butyl-2-ethylpentamethylen-diisocyanat, 2-Isocyanatopropylcyclohexylisocyanat, 3(4)-Isocyanatomethyl-1-methylcyclohexylisocyanat, 1,4-Diisocyanato-4-methylpentan, 4-Methyl-cyclohexan-1,3-diisocyanat, 2,4'-Methylenbis(cyclohexyl)diisocyanat oder aus deren Mischungen ausgewählt ist.

4. Verfahren nach einem der Ansprüche 1 bis 3, **dadurch gekennzeichnet, dass** das Di- oder Polyisocyanat II aus 2,4-Toluylendiisocyanat, 2,6-Toluylendiisocyanat, 4,4'-Diphenylmethandiisocyanat, 2,4'-Diphenylmethandiisocyanat, höherkernigen Homologen des Diphenylmethandiisocyanats, 1,5-Naphthylendiisocyanat, Tolidindiisocyanat, 1,3- und 1,4-Phenylendiisocyanat, Triisocyanatotoluol, Diphenyldiisocyanat, Tetramethylendiisocyanat, Hexamethylendiisocyanat, Dodecyldiisocyanat, Lysinalkylester-diisocyanat, wobei Alkyl für C₁ bis C₁₀ steht, Isophorondiisocyanat, 2-Methyl-pentamethylendiisocyanat, 2,2,4- oder 2,4,4-Trimethyl-1,6-hexamethylen-diisocyanat, 1,3- und 1,4-Diisocyanatocyclohexan, 3(4)-Isocyanatomethyl-1-methyl-1-isocyanatocyclohexan, 2-Butyl-2-ethylpentamethylen-diisocyanat, 4-Isocyanatomethyl-1,8-octamethylendiisocyanat, 2-Isocyanatopropylcyclohexyl-isocyanat, 2- oder 4-Methylcyclohexan-1,3-diisocyanat, 4,4'- und 2,4'-Methylen-bis(cyclohexyl)-diisocyanat, 1,3- oder 1,4-Bis(isocyanatomethyl)cyclohexan, Xylylendiisocyanat, Tetramethylxylylendiisocyanat und Oligo- oder Polyisocyanaten aus den genannten Isocyanaten, die durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen hergestellt werden, oder aus den Mischungen der genannten Isocyanate ausgewählt ist.

5. Verfahren nach einem der Ansprüche 1 bis 4, **dadurch gekennzeichnet, dass** bei der Umsetzung des Additionsproduktes (A) und/oder des Polyadditionsprodukts (P) mit dem Di- oder Polyisocyanat II das Verhältnis von Isocyanatgruppen des Di- oder Polyisocyanats II zu den mit Isocyanat reaktiven Gruppen des Additionsproduktes (A) und/oder des Polyadditionsprodukts (P) so gewählt wird, daß mindestens 10 %, vorzugsweise mindestens 40 % der NCO-Gruppen des Di- oder Polyisocyanats II umgesetzt werden.

6. Verfahren nach einem der Ansprüche 1 bis 5, **dadurch gekennzeichnet, dass** die mit Isocyanat reaktiven Gruppen der Komponenten (b1) und/oder (b2) aus einer Hydroxylgruppe, einer Mercaptogruppe, einer Aminogruppe oder einem Gemisch davon ausgewählt sind.

7. Verfahren nach einem der Ansprüche 1 bis 6, **dadurch gekennzeichnet, dass** als Di- oder Polyisocyanat I Isophorondiisocyanat, Isophorondiisocyanat-Trimer, 2,4-Toluylendiisocyanat oder 2,4'-Diphenylmethandiisocyanat und als Di- oder Polyisocyanat II Hexamethylendiisocyanat, ein Hexamethylendiisocyanat-Oligomerengemisch, 4,4'-Diphenylmethandiisocyanat, 2,4'-Diphenylmethandiisocyanat, eine Mischung aus Diphenylmethandiisocyanaten und höherkenigen Homologen des Diphenylmethandisocyanats (Polymer-MDI) oder eine Mischung der genannten Isocyanate verwendet wird.

8. Verfahren nach einem der Ansprüche 1 - 7, **dadurch gekennzeichnet, dass** als mit Isocyanat reaktive Gruppen aufweisende Verbindungen (b1) Glycerin, Trimethylolmethan, Trimethylolethan, Trimethylolpropan, 1,2,4-Butantriol, Tris(hydroxymethyl)-aminomethan, Tris(hydroxyethyl)aminomethan, 2-Amino-1,3-propandiol, 2-Amino-2-methyl-1,3-propandiol, Diethanolamin, Dipropanolamin, Diisopropanolamin, Ethanolpropanolamin, Bis(aminoethyl)amin, Bis(aminopropyl)amin, Tris(aminoethyl)amin, Tris(aminopropyl)amin, Trisaminononan, Pentaerythrit, Bis(trimethylolpropan), tri- oder tetrafunktionelle Polyether- oder Polyesterole und als Verbindungen (b2) Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Propan-1,2-dithiol, Butan-1,2-dithiol, Mercaptoethanol, Mercaptopropanol, Mercaptobutanol, Ethylendiamin, Toluylendiamin, Isophorondiamin, Cysteamin, Ethanolamin, N-Methylethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Aminopropanthiol oder difunktionelle Polyether- oder Polyesterole verwendet werden.

9. Hochfunktionelle Polyisocyanate, herstellbar nach einem der Ansprüche 1 - 8.

10. Hochfunktionelle Polyisocyanate, herstellbar nach einem der Ansprüche 1 - 8, **dadurch gekennzeichnet, dass** die Polyisocyanate sowohl aliphatisch als auch aromatisch gebundene Isocyanatgruppen aufweisen.

11. Verwendung der Polyisocyanate nach Anspruch 9 oder 10 zur Herstellung von Lacken, Überzügen, Klebstoffen, Dichtmassen, Gießelastomeren und/oder Schaumstoffen.

12. Polyadditionsprodukte, erhältlich unter Verwendung von hochfunktionellen Polyisocyanaten nach Anspruch 9 oder 10.

## Claims

1. A process for preparing high-functionality polyisocyanates, which comprises
(i) preparation of an addition product (A) which comprises one group which is reactive toward isocyanate and at least two isocyanate groups by reacting
(a) a diisocyanate or polyisocyanate I with
(b1) compounds having at least three groups which are reactive toward isocyanate or
(b2) compounds containing two groups which are reactive toward isocyanate or mixtures of (b1) and (b2),
where at least one of the components (a) or (b) has functional groups having differing reactivities toward the functional groups of the other component and the reaction ratio is selected so that the addition product (A) comprises an average of one group which is reactive toward isocyanate,
(ii) if appropriate, intermolecular addition reaction of the addition product (A) to form a polyaddition product (P) comprising an average of one group which is reactive toward isocyanate and an average of more than two isocyanate groups, and
(iii) reaction of the addition product (A) and/or the polyaddition product (P) with a diisocyanate or polyisocyanate II, wherein the diisocyanate or polyisocyanate I is different from the diisocyanate or polyisocyanate II.

2. The process according to claim 1, wherein the diisocyanate or polyisocyanate I used is tetramethylene diisocyanate, tetramethylene diisocyanate trimer, hexamethylene diisocyanate, hexamethylene diisocyanate trimer, dodecyl diisocyanate, isophorone diisocyanate trimer, 4-isocyanatomethyloctamethylene 1,8-diisocyanate, diphenylmethane 4,4'-diisocyanate or a mixture thereof.

3. The process according to claim 1, wherein the diisocyanate or polyisocyanate I has isocyanate groups of differing reactivity and is selected from among tolylene 2,4-diisocyanate, tolylene 2,6-diisocyanate, diphenylmethane 2,4'-diisocyanate, phenylene 1,3- and 1,4-diisocyanate, naphthylene 1,5-diisocyanate, tolidine diisocyanate, triisocyanatotoluene, biphenyl diisocyanate, isophorone diisocyanate, 2-butyl-2-ethylpentamethylene diisocyanate, 2-isocyanatopropylcyclohexyl isocyanate, 3(4)-isocyanatomethyl-1-methylcyclohexyl isocyanate, 1,4-diisocyanato-4-methylpentane, 4-methylcyclohexane 1,3-diisocyanate, dicyclohexylmethane 2,4'-diisocyanate and mixtures thereof.

4. The process according to any of claims 1 to 3, wherein the diisocyanate or polyisocyanate II is selected from among tolylene 2,4-diisocyanate, tolylene 2,6-diisocyanate, diphenylmethane 4,4'-diisocyanate, diphenylmethane 2,4'-diisocyanate, higher homologues of diphenylmethane diisocyanate, naphthylene 1,5-diisocyanate, tolidine diisocyanate, phenylene 1,3- and 1,4-diisocyanate, triisocyanatotoluene, biphenyl diisocyanate, tetramethylene diisocyanate, hexamethylene diisocyanate, dodecyl diisocyanate, lysine alkyl ester diisocyanate, where alkyl is C₁-C₁₀-alkyl, isophorone diisocyanate, 2-methylpentamethylene diisocyanate, 2,2,4- or 2,4,4-trimethylhexamethylene 1,6-diisocyanate, 1,3- and 1,4-diisocyanatocyclohexane, 3(4)-isocyanatomethyl-1-methyl-1-isocyanatocyclohexane, 2-butyl-2-ethylpentamethylene diisocyanate, 4-isocyanatomethyloctamethylene 1,8-diisocyanate, 2-isocyanatopropylcyclohexyl isocyanate, 2- or 4-methylcyclohexane 1,3-diisocyanate, dicyclohexylmethane 4,4'- and 2,4'-diisocyanate, 1,3- or 1,4-bis(isocyanatomethyl)cyclohexane, xylylene diisocyanate, tetramethylxylylene diisocyanate and oligoisocyanates or polyisocyanates prepared from the isocyanates listed by coupling by means of urethane, allophanate, urea, biuret, uretdione, amide, isocyanurate, carbodiimide, uretonimine, oxadiazinetrione or iminooxadiazinedione structures, or from among mixtures of the isocyanates mentioned.

5. The process according to any of claims 1 to 4, wherein, in the reaction of the addition product (A) and/or the polyaddition product (P) with the diisocyanate or polyisocyanate II, the ratio of isocyanate groups of the diisocyanate or polyisocyanate II to the isocyanate-reactive groups of the addition product (A) and/or the polyaddition product (P) is selected so that at least 10%, preferably at least 40%, of the NCO groups of the diisocyanate or polyisocyanate II are reacted.

6. The process according to any of claims 1 to 5, wherein the isocyanate-reactive groups of the components (b1) and/or (b2) are selected from among hydroxyl groups, mercapto groups, amino groups and mixtures thereof.

7. The process according to any of claims 1 to 6, wherein the diisocyanate or polyisocyanate I used is isophorone diisocyanate, isophorone diisocyanate trimer, tolylene 2,4-diisocyanate or diphenylmethane 2,4'-diisocyanate and the diisocyanate or polyisocyanate II used is hexamethylene diisocyanate, a hexamethylene diisocyanate oligomer mixture, diphenylmethane 4,4'-diisocyanate, diphenylmethane 2,4'-diisocyanate, a mixture of diphenylmethane diisocyanates and higher homologues of diphenylmethane diisocyanate (polymeric MDI) or a mixture of the isocyanates listed.

8. The process according to any of claims 1 to 7, wherein the compounds (b1) having groups which are reactive toward isocyanate are glycerol, trimethylolmethane, trimethylolethane, trimethylolpropane, 1,2,4-butanetriol, tris(hydroxymethyl)aminomethane, tris(hydroxyethyl)aminomethane, 2-amino-1,3-propanediol, 2-amino-2-methyl-1,3-propanediol, diethanolamine, dipropanolamine, diisopropanolamine, ethanolpropanolamine, bis(aminoethyl)amine, bis(aminopropyl)amine, tris(aminoethyl)amine, tris(aminopropyl)amine, trisaminononane, pentaerythritol, bis(trimethylolpropane), trifunctional or tetrafunctional polyetherols or polyesterols and the compounds (b2) used are ethylene glycol, diethylene glycol, triethylene glycol, 1,2- and 1,3-propanediol, dipropylene glycol, tripropylene glycol, neopentyl glycol, 1,2-, 1,3- and 1,4-butanediol, 1,2-, 1,3- and 1,5-pentanediol, hexanediol, propane-1,2-dithiol, butane-1,2-dithiol, mercaptoethanol, mercaptopropanol, mercaptobutanol, ethylenediamine, tolylenediamine, isophoronediamine, cysteamine, ethanolamine, N-methylethanolamine, propanolamine, isopropanolamine, 2-(butylamino)ethanol, 2-(cyclohexylamino)ethanol, 2-amino-1-butanol, 2-(2'-aminoethoxy)ethanol or higher alkoxylation products of ammonia, 4-hydroxypiperidine, 1-hydroxyethylpiperazine, aminopropanethiol or bifunctional polyetherols or polyesterols.

9. A high-functionality polyisocyanate, which can be prepared according to any of claims 1 to 8.

10. A high-functionality polyisocyanate which can be prepared according to any of claims 1 to 8 and has both aliphatically bound and aromatically bound isocyanate groups.

11. The use of the polyisocyanate according to claim 9 or 10 for producing paints and varnishes, coatings, adhesives, sealants, pourable elastomers and/or foams.

12. A polyaddition product obtainable using a high-functionality polyisocyanate according to claim 9 or 10.

## Revendications

1. Procédé de préparation de polyisocyanates ayant une fonctionnalité élevée comprenant :
(i) la préparation d'un produit d'addition (A) qui contient un groupe réactif aux isocyanates et au moins deux groupes isocyanate, par mise en réaction d'un :
(a) diisocyanate ou polyisocyanate I avec
(b1) des composés ayant au moins trois groupes réactifs aux isocyanates ou
(b2) des composés ayant deux groupes réactifs aux isocyanates ou des mélanges de (b1) et (b2),
au moins un des composants (a) ou (b) présentant des groupes fonctionnels avec une réactivité différente par rapport aux groupes fonctionnels des autres composants et le rapport de réaction étant choisi de telle sorte que le produit d'addition (A) contienne en moyenne un groupe réactif aux isocyanates,
(ii) éventuellement une réaction d'addition intermoléculaire du produit d'addition (A) à un produit de polyaddition (P) qui contient en moyenne un groupe réactif aux isocyanates et plus de deux groupes isocyanate et
(iii) la réaction du produit d'addition (A) et/ou du produit de polyaddition (P) avec un diisocyanate ou polyisocyanate II, le di- ou polyisocyanate I et le diisocyanate ou polyisocyanate II étant différents.

2. Procédé selon la revendication 1, **caractérisé en ce que** le diisocyanate ou polyisocyanate I utilisé est diisocyanate de tétraméthylène, un trimère de diisocyanate de tétraméthylène, le diisocyanate d'hexaméthylène, un trimère de diisocyanate d'hexaméthylène, le diisocyanate dodécylique, le trimère de diisocyanate d'isophorone, du diisocyanate de 4-isocyanatométhyl-1,8-octaméthylène, le diisocyanate de 4,4'-diphénylméthane ou un mélange de ceux-ci.

3. Procédé selon la revendication 1, **caractérisé en ce que** le diisocyanate ou polyisocyanate I présente des groupes isocyanate de réactivité différente et est sélectionné parmi le diisocyanate de 2,4-toluylène, le diisocyanate de 2,6-toluylène, le diisocyanate le 2,4'-diphénylméthane, le diisocyanate de 1,3- et 1,4-phénylène , le diisocyanate de 1,5-naphthylène, le diisocyanate de tolidine, le triisococyanatotoluène, le diphényldiisocyanate, le diisocyanate d'isophorone, le diisocyanate de 2-butyl-2-éthylpentaméthylène, le 2-isocyanatopropylcyclohexylisocyanate, le 3(4)-isocyanatométhyl-1-méthylcyclohexylisocyanate, le 1,4-diisocyanato-4-méthylpentane, le 4-méthylcyclohexane-1,3-diisocyanate, le 2,4'-méthylènebis(cyclohexyl)diisocyanate ou leurs mélanges.

4. Procédé selon l'une des revendications 1 à 3, **caractérisé en ce que** le diisocyanate ou polyisocyanate II est sélectionné parmi le diisocyanate le 2,4-toluylène, le diisocyanate de 2,6-toluylène, le diisocyanate de 4,4'-diphénylméthane, le diisocyanate de 2,4'-diphénylméthane, des homologues à noyau plus élevé de diisocyanate de diphénylméthane, le diisocyanate de 1,5-naphtylène, le diisocyanate de tolidine, le diisocyanate de 1,3- et 1,4-phénylène, le triisocyanatotoluène, le diphényldiisocyanate, le diisocyanate de tétraméthylène, le diisocyanate d'hexaméthylène, le dodécyldiisocyanate, le diisocyanate de lysinalkylester, l'alkyle désignant C₁ à C₁₀, le diisocyanate d'isophorone, le diisocyanate de 2-méthylpentaméthylène, le diisocyanate de 2,2,4- ou 2,4,4-triméthyl-1,6-hexaméthylène, le 1,3- et 1,4-diisocyanatocyclohexane, le 3(4)-isocyanatométhyl-1-méthyl-1-isocyanatocyclohexane, le diisocyanate de 2-butyl-2-éthylpentaméthylène, le diisocyanate de 4-isocyanatométhyl-1,8-octaméthylène, le 2-isocyanatopropylcyclohexylisocyanate, le 1,3-diisocyanate de 2- ou 4-méthylcyclohexane, le bis(cyclohexyl)-diisocyanate de 4,4'- et 2,4'-méthylène, le 1,3- ou 1,4-bis(isocyanatométhyl)cyclohexane, le diisocyanate de xylylène, le diisocyanate de tétraméthylxylylène et les oligoisocyanates ou polyisocyanates à partir desdits isocyanates qui sont préparés par liaison à l'aide de structures uréthanne, allophanate, urée, biuret, uretdione, amide, isocyanurate, carbodiimide, urétonimine, oxadiazintrione ou iminooxadiazindione ou parmi les mélanges desdits isocyanates.

5. Procédé selon l'une des revendications 1 à 4, **caractérisé en ce que**, lors de la mise en réaction du produit d'addition (A) et/ou du produit de polyaddition (P) avec le diisocyanate ou polyisocyanate II, le rapport des groupes isocyanate du diisocyanate ou polyisocyanate II avec les groupes réactifs aux isocyanates du produit d'addition (A) et/ou du produit de polyaddition (P) est choisi de telle sorte qu'au moins 10%, de préférence au moins 40% des groupes NCO du diisocyanate ou polyisocyanate II sont mis en réaction.

6. Procédé selon l'une des revendications 1 à 5, **caractérisé en ce que** les groupes réactifs aux isocyanates des composants (b1) et/ou (b2) sont sélectionnés parmi un groupe hydroxyle, un groupe mercapto, un groupe amino ou un mélange de ceux-ci.

7. Procédé selon l'une des revendications 1 à 6, **caractérisé en ce que** le diisocyanate ou polyisocyanate I utilisé est le diisocyanate d'isophorone, un trimère de diisocyanate d'isophorone, le diisocyanate de 2,4-toluylène ou le diisocyanate de 2,4'-diphénylméthane et le diisocyanate ou polyisocyanate II est le diisocyanate d'hexaméthylène, un mélange d'oligoméres de diisocyanate d'hexaméthylène, le diisocyanate de 4,4'-diphénylméthane, le diisocyanate de 2,4'-diphénylméthane, un mélange de diisocyanates de diphénylméthane et d'homologues à noyau plus élevé de diisocyanate de diphénylméthane (MDI polymère) ou un mélange desdits isocyanates.

8. Procédé selon l'une des revendications 1 à 7, **caractérisé en ce que** les composés (b1) présentant des groupes réactifs aux isocyanates utilisés sont la glycérine, le triméthylolméthane, le triméthyloléthane, le triméthylolpropane, le 1,2,4-butanetriol, le tris(hydroxyméthyl)aminométhane, le tris(hydroxyéthyl)aminométhane, le 2-amino-1,3-propanediol, le 2-amino-2-méthyl-1,3-propanedïol, la diéthanolamine, la dipropanolamine, la diisopropanolamine, l'éthanolpropanolamine, la bis(aminoéthyl)aminé, la bis(aminopropyl)amine, la tris(aminoéthyl)amine, la tris(aminopropyl)amine, le trisaminononane, le pentaérythritol, le bis(triméthylolpropane), les polyétherols ou polyestérols trifonctionnels ou tétrafonctionnels et les composés (b2) sont l'éthylèneglycol, le diéthylèneglycol, le triéthylèneglycol, le 1,2- et 1,3-propanediol, le dipropylèneglycol, le tripropylèneglycol, le néopentylglycol, le 1,2-, 1,3- et 1,4-butanediol, le 1,2-, 1,3- et 1,5-pentanediol, l'hexanediol, le propane-1,2-dithiol, le butane-1,2-dithiol, le mercaptoéthanol, le mercaptopropanol, le mercaptobutanol, l'éthylènediamine, la toluylènediamine, l'isophoronediamine, la cystéamine, l'éthanolamine, la N-méthyléthanolamine, la propanolamine, l'isopropanolamine, le 2-(butylamino)éthanol, le 2-(cyclohexylamino)éthanol, le 2-amino-1-butanol, le 2-(2'-aminoéthoxy)éthanol ou des produits d'alcoxylation supérieurs de l'ammoniac, la 4-hydroxypipéridine, la 1-hydroxyéthylpipérazine, l'aminopropanethiol ou les polyétherols ou polyestérols difonctionnels.

9. Polyisocyanates ayant une fonctionnalité élevée pouvant être préparés selon l'une des revendications 1 à 8.

10. Polyisocyanates ayant une fonctionnalité élevée pouvant être préparés selon l'une des revendications 1 à 8, **caractérisés en ce que** les polyisocyanates présentent des groupes isocyanate liés à la fois aliphatiquement et aromatiquement.

11. Utilisation des polyisocyanates selon la revendication 9 ou 10 en vue de la préparation de peintures, de revêtements, d'adhésifs, de masses d'étanchéité, d'élastomères à couler et/ou de mousses.

12. Produits de polyaddition obtenus en utilisant des polyisocyanates ayant une fonctionnalité élevée selon la revendication 9 ou 10.
